# EUROPÄISCHE PATENTSCHRIFT

(11) **EP 2 989 326 B1**
(45) Veröffentlichungstag und Bekanntmachung des Hinweises auf die Patenterteilung: **20.12.2017**
(21) Anmeldenummer: 14720570.2
(22) Anmeldetag: 25.04.2014
(51) Int. Cl.: F04B 9/04, F04B 45/04, F04B 45/047

(54) **PUMPENAGGREGAT**
PUMP UNIT
GROUPE MOTOPOMPE

(30) Priorität: 26.04.2013 DE 102013207741
(43) Veröffentlichungstag der Anmeldung: 02.03.2016
(73) Patentinhaber: Continental Teves AG&Co. Ohg, 60488 Frankfurt (DE)
(72) Erfinder: KREBS, Stephan, 65760 Eschborn (DE); BACHER, Jens, 60439 Frankfurt am Main (DE); KREH, Heinrich, 61197 Florstadt (DE); MILISIC, Lazar, 65779 Kelkheim / Taunus (DE); JÜRGING, Michael, 65779 Kelkheim (DE); NIEPENBERG, Marcel, 64390 Erzhausen (DE); GONZALEZ, Jose, 32549 Bad Oeynhausen (DE); SEITZ, Karlheinz, 64653 Lorsch (DE); KOPPEL, Hans-Michael, 65931 Frankfurt (DE); PETZOLD, Falk, 60489 Frankfurt/M (DE); FELLINGER, Rolf, 21190 P. Rayong (TH); OEFFNER, Thomas, 61184 Karben (DE); WIEBE, Paul, 64331 Weiterstadt (DE); IMHOF, Stefan, 61440 Oberursel (DE); RÜFFER, Manfred, 65843 Sulzbach (DE)
(86) Internationale Anmeldenummer: PCT/EP2014/058447
(87) Internationale Veröffentlichungsnummer: WO 2014/174072

(56) Entgegenhaltungen:
- EP-A2- 1 953 387
- WO-A1-2011/073318
- DE-A1-102008 005 820
- DE-A1-102009 054 502
- DE-A1-102011 006 525

## Beschreibung

Die Erfindung betrifft Pumpenaggregat mit den Merkmalen vom Oberbegriff vom Patentanspruch 1, insbesondere zur Unterdruckversorgung eines pneumatischen Bremskraftverstärkers.

### Stand der Technik:

Pumpenaggregate zur Verwendung in einem Kraftfahrzeug zur unterstützenden oder exklusiven Unterdruckversorgung eines pneumatischen Bremskraftverstärkers sind grundsätzlich bekannt.

Beispielsweise aus DE 10 2009 054 502 A1 sind Doppelmembran-Pumpenaggregate bekannt, die über einen elektromotorischen Antrieb, einen zwei Exzenterelemente umfassenden Kurbeltrieb und zwei durch den Kurbeltrieb antreibbare elastische Verdrängerelemente verfügen. Um eine vorgesehene zeitliche Abfolge von Bewegungen der Verdrängerelemente sicherzustellen, weist der Kurbeltrieb Verdrehsicherungsmittel, welche eine gegenseitige Verdrehung von Exzenterelementen zueinander verhindern und eine definierten Drehwinkellage der Exzenterelemente zueinander sichern. Es ist bekannt, solche Verdrehsicherungsmittel durch zwei Spannstifte zu realisieren, welche gleichzeitig in korrespondierende Bohrungen zweier benachbarter Exzenterelemente eingreifen und dadurch deren gegenseitige Verdrehung verhindern.

Um einen schwingungsarmen Betrieb des Pumpenaggregats sicherzustellen ist es ferner bekannt, die Exzenterelemente mit Wuchtelementen auszustatten, welche als Ausgleichsgewichte am Kurbeltrieb dienen und Vibrationen im Betrieb mindern. So ist es beispielsweise bekannt, die Exzenterelemente einteilig mit den Wuchtelementen im Sinterverfahren herzustellen.

Ebenso sind Pumpenaggregate der eingangs genannten Gattung bekannt, welche über in dem Pumpengehäuse integrierte Luftkanäle verfügen, die eine Schnittstelle in der Ebene des Verdrängerelements aufweisen. Es ist bekannt, diese Schnittstellen mit separaten Dichtelementen wie O-Ringe abzudichten. Der Aufwand bei der Herstellung und Montage der eingangs genannten Pumpenaggregate wird als verbesserungswürdig angesehen.

### Aufgabe:

Es ist daher eine Aufgabe der vorliegenden Erfindung, ein Pumpenaggregat mit einem gegenüber dem eingangs genannten Stand der Technik verbesserten Montageaufwand und vereinfachter Herstellbarkeit anzubieten.

### Lösung und Vorteile:

Die Aufgabe wird erfindungsgemäß zusammen mit den kennzeichnenden Merkmalen von dem unabhängigen Anspruch 1 gelöst. Unteransprüche geben weitere mögliche vorteilhafte Ausgestaltungen an.

Indem die Verdrehsicherungsmittel erfindungsgemäß als integrale Formelemente des Lagersitzelements und zwar derart ausgeführt sind, dass sie in einer definierten gegenseitigen Drehwinkellage von Exzenterelementen zueinander formschlüssig ineinander greifen, werden zusätzliche Zentrier- oder Spannstifte für die Verdrehsicherung sowie deren Montageoperationen eingespart. Die Erfindung sieht dabei vor, dass das Lagersitzelement wenigstens einen Vorsprung und wenigstens eine Einbuchtung aufweisen, die zueinander um 180° um die Rotationsachse versetzt angeordnet sind derart, dass in einer definierten Drehwinkellage von zwei Exzenterelementen zueinander ein Vorsprung eines Lagersitzelements in eine Einbuchtung des anderen Lagersitzelements formschlüssig eingreift und dadurch effektiv und einfach eine Verdreh-sicherungsfunktion realisiert wird. Zudem wird eine eindeutige gegenseitige Positionierung der Exzenterelemente ohne weitere Bauteile einfach sichergestellt, Montagefehler und die Anzahl von Schnittstellen und Kettentoleranzen mit Vorteil reduziert.

Vorzugsweise kann der Vorsprung mit der Einbuchtung eine Übermaßpassung aufweisen. Damit wird auf eine besonders effektive Weise ein Spiel in dem Verbund von zwei Exzenterelementen vermieden, eine Schlagbelastung der Verdrehsicherung sowie Geräuschemissionen im Betrieb des Pumpenaggregats reduziert und die Dauerhaltbarkeit des Kurbeltriebs erhöht.

In einer vorteilhaften Weiterbildung der Erfindung können der Vorsprung und die Einbuchtung jeweils eine im Wesentlichen quaderförmige Grundgestalt aufweisen. In einer weiteren vorteilhaften Weiterbildung kann die Einbuchtung von der Achsbohrung in radiale Richtung bis hin zu einer radialen Außenkontur des Lagersitzelements nutförmig ausgedehnt ausgeführt sein. Die Herstellung der Einbuchtung wird dadurch vereinfacht, zudem begünstigt die offene Nutform einen Selbstreinigungseffekt, eine Gefahr von Ansammlung von Fremdkörpern in der Einbuchtung, welche eine korrekte Montage von Exzenterelementen erschweren oder verhindern können, wird effektiv verringert.

In einer anderen vorteilhaften erfindungsgemäßen Ausführungsform kann das Wuchtelement kraftschlüssig auf dem Lagersitzelement befestigt vorgesehen sein, insbesondere kann das Wuchtelement einen Durchbruch aufweisen, welches das Lagersitzelement kraftschlüssig über eine Klemm- oder Presspassung aufnimmt. Dadurch können sowohl das Lagersitzelement als auch das Wuchtelement aus günstigen Halbzeugen effektiv einzeln hergestellt werden. Beispielsweise kann das Lagersitzelement aus einem Stab geschnitten und das Wuchtelement aus einem Flachband gestanzt sein.

Vorteilhafterweise kann zudem das Lagersitzelement einfach und effektiv in dem Durchbruch eingepresst oder eingeschrumpft werden, so dass keine zusätzliche form- oder stoffschlüssige Befestigungshilfen wie Schrauben oder Schweißpunkte erforderlich sind.

Vorteilhafterweise können die erfindungsgemäße Exzenterelemente identisch gestaltet ausgeführt sein und somit der Fertigungsaufwand durch die Verwendung von mehreren gleichen Komponenten in einem Pumpenaggregat verringert werden.

In einer anderen erfindungsgemäßen Ausführungsform des Pumpenaggregats mit einem Pumpengehäuse, welches über wenigstens ein integriertes Luftkanal verfügt, kann wenigstens ein Verdrängerelement mit Vorteil Mittel zur Abdichtung des Luftkanals aufweisen, insbesondere können ein oder mehrere Dichtelemente einstückig an das Verdrängerelement angeformt ausgeführt sein. Dadurch wird auf separate Montagevorgänge von einzelnen Dichtelementen verzichtet, kostspielige und Sicherheitsrelevante Montagefehler wie beispielsweise fehlenden oder falsch positionierte Dichtelemente können effektiv verringert werden.

### Figurenbeschreibung:

Weitere Einzelheiten, Merkmale, Vorteile und Anwendungsmöglichkeiten der Erfindung gehen aus Unteransprüchen zusammen mit der Beschreibung anhand der Zeichnungen hervor. Übereinstimmende Komponenten und Konstruktionselemente werden nach Möglichkeit mit gleichen Bezugszeichen versehen. Nachstehend zeigt:
Fig.1 ein bekanntes Pumpenaggregat der eingangs genannten Gattung in einer Querschnitt.
Fig.2 ein bekanntes Exzenterelement in einer räumlichen (a) und Schnittdarstellung (b).
Fig.3 eine erfindungsgemäße Ausführungsform eines Exzenterelements in einer räumlichen Darstellung.
Fig.4 eine Schnittdarstellung zweier Exzenterelemente entsprechend der Ausführung nach der Fig.3, in einem montierten Zustand auf einer Antriebswelle.
Fig.5 eine weitere erfindungsgemäße Ausführungsform eines Exzenterelements in einer Schnittdarstellung.

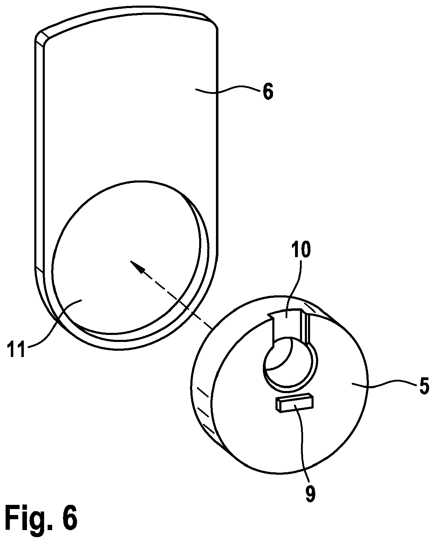

Fig.6 eine Ausführungsform eines Exzenterelements entsprechend der Fig.5 in einer Explosionsdarstellung.
Fig.7 Eine Draufsicht auf ein Pumpengehäuse mit einem darin eingesetzten bekannten Verdrängerelement.
Fig.8 eine erfindungsgemäße Ausführungsform des Verdrängerelements in einer Draufsicht (a) und in einer Schnittdarstellung (b).

### Fig.1

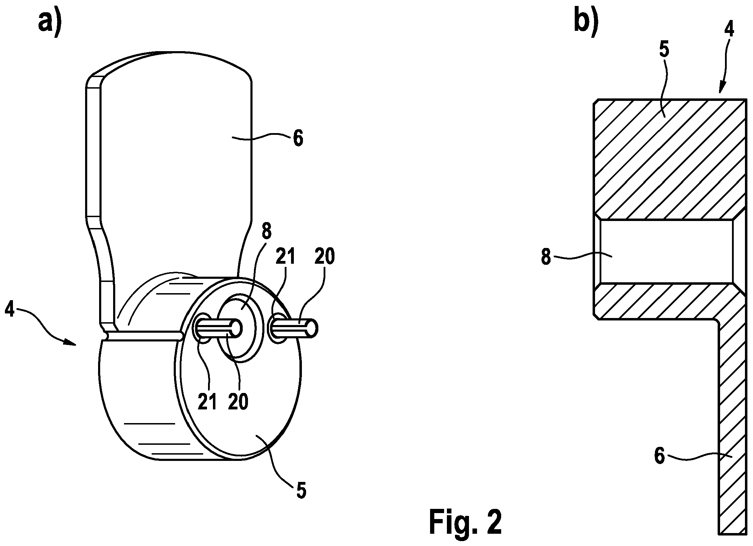

Ein bekanntes Pumpenaggregat 1 verfügt über ein Pumpengehäuse 12 und einen elektrischen Antrieb 13, der über die Antriebswelle 7 einen Kurbeltrieb 14 in Bewegung versetzt. Zwei Exzenterelemente 4,4' sind nebeneinander an der Antriebswelle 7 angeordnet und weisen im Wesentlichen jeweils ein weitgehend zylindrisch gestaltetes Lagerungselement 4 sowie ein einseitig am Lagerungselement 4 bzw. 4' anschließendes Wuchtelement 5 bzw. 5' auf. Die Mittelpunkte der beiden Lagerungselemente 4,4' sind um einen Drehwinkel von 180° um die Rotationsachse R gegeneinander versetzt angeordnet. Um diese definierte Drehwinkellage der beiden Exzenterelemente zueinander permanent einzuhalten, verfügen die Exzenterelemente über Verdrehsicherungsmittel, welche in der Fig.2 beschrieben werden. Der Kurbeltrieb 14 weist zwei Pleuelstangen 3,3' auf, welche jeweils über die Kugellager 15, 15' drehbar auf den Lagersitzelementen 5,5' befestigt sind. Die Pleuelstangen 3,3' enden in den elastischen Verdrängerelementen 2,2'. Die Verdrängerelemente 2,2' sind luftdicht zwischen dem Pumpengehäuse 12 und jeweils einem Arbeitsraumdeckel 16,16' eingespannt und begrenzen somit jeweils ein Arbeitsraum 17,17'.

Durch die Rotation der Antriebswelle 7 um die Rotationsachse R werden die Verdrängerelemente 2,2' in eine translatorische Bewegung versetzt, so dass das Volumen der beiden Arbeitskammern 17,17' abwechselnd vergrößert und verkleinert wird und dadurch die Luft über eine Rückschlagventilanordnung 18,18' mit den zugeordneten Kanälen aus einem nicht gezeigten pneumatischen Bremskraftverstärker durch eine Vakuumleitung 19 in die Arbeitskammern 17,17' eingesaugt und anschließend in die Umgebung ausgestoßen wird.

Die Versetzung von Exzenterelementen 4,4' um den Drehwinkel von 180° zueinander bewirkt dass der obere Totpunkt des Pleuelstange 3 mit dem unteren Totpunkt der Pleuelstnge3' zusammenfällt und umgekehrt. Dadurch wird sichergestellt, dass das Ansaugen und Ausblasen der Luft in den Arbeitskammern 17,17' niemals gleichzeitig erfolgt und, die Last am Antrieb 13 möglichst gleichmäßig verteilt ist, wodurch Unwuchten und Vibrationen des Pumpenaggregats verringert werden. Einer weiteren Verringerung von Unwuchten und Vibrationen dienen Wuchtelemente 6,6` der Exzenterelemente 4,4', welche einen durch eine Anordnung der Mittelpunkte der Lagersitzelemente 5,5' neben der Rotationsachse R entstehenden Massenversatz ausgleichen.

### Fig.2

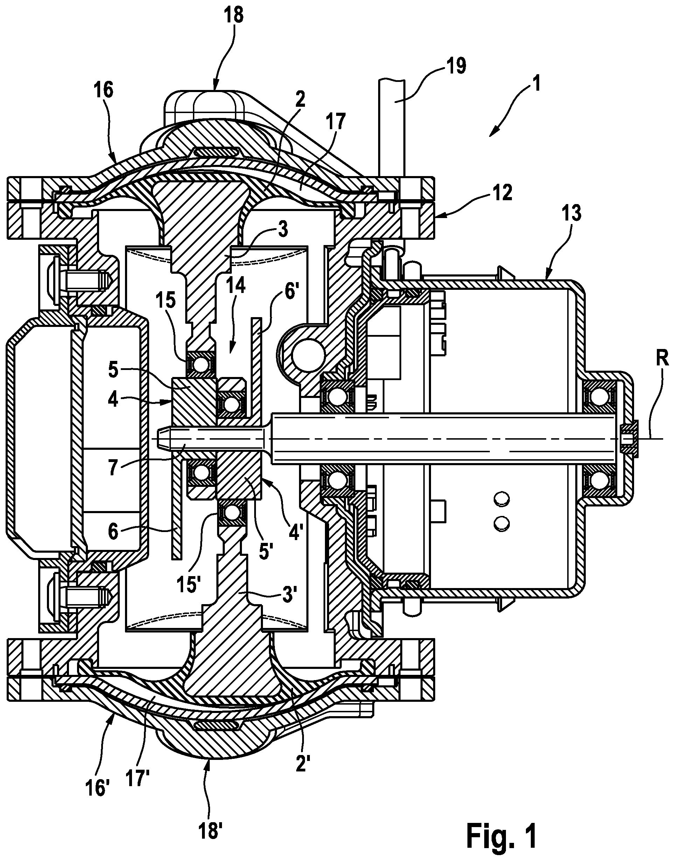

In der Fig.2 ist ein in der Fig.1 bereits gezeigtes Exzenterelement 4 räumlich und in einer Schnittdarstellung gezeigt. Das Exzenterelement 4 mit seinem Lagersitzelement 5 und dem Wuchtelement 6 einteilig im Sinterverfahren hergestellt. Eine Achsbohrung 8 durchragt das Lagersitzelement 5 und dient der Führung und Befestigung des Exzenterelements 4 an der Antriebswelle 7. Zur Verdrehsicherung von zwei benachbarten Exzenterelementen gegeneinander dienen zwei Spannstifte 20, welche in die Stiftbohrungen 21 eingesetzt sind. Sind zwei Exzenterelemente in einer bestimmten konstruktiv vorgesehenen Drehwinkellage um die Rotationsachse R zueinander an der Antriebswelle positioniert, fluchten die Stiftbohrungen 21 und die darin eingesetzten Spannstifte 20 sichern die Exzenterelemente formschlüssig vor einer ungewollten Änderung der gegenseitigen Drehwinkellage.

### Fig.3

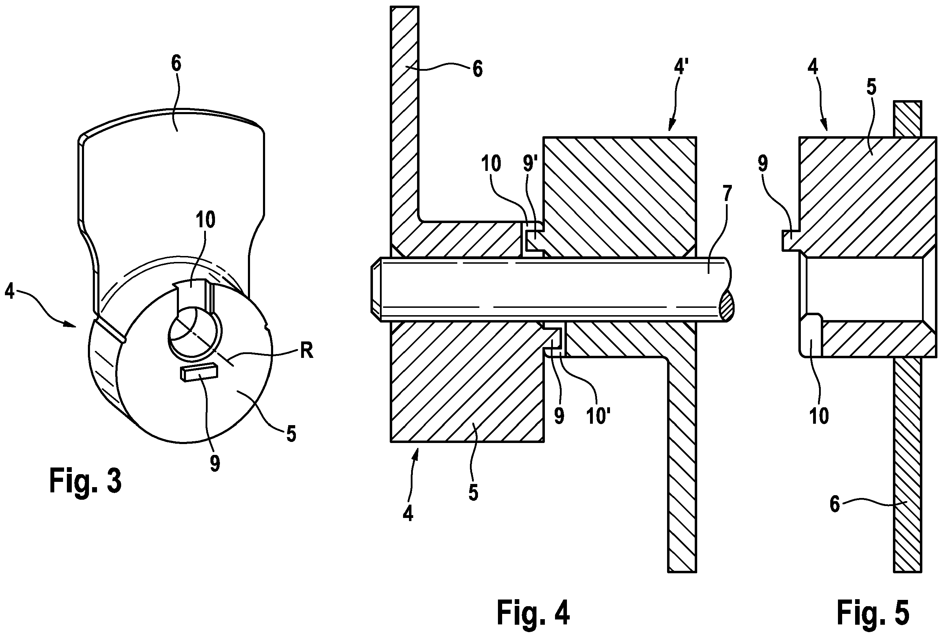

In der Fig.3 ist eine erste erfindungsgemäße Ausführungsform eines Exzenterelements 4 gezeigt. Das Lagersitzelement 5 ist ebenfalls einteilig mit dem Wuchtelement 6 ausgeführt, jedoch weist das Lagersitzelement 5 zur Verdrehsicherung statt der aufwendig herstellbaren und montierbaren Bohrungen und Stiften jeweils einen Vorsprung 9 und eine Einbuchtung 10 auf, die um 180° um die Rotationsachse R versetzt als integrale Formelemente des Lagersitzelements 5 ausgeführt sind.

Vorzugseise dehnt sich die Einbuchtung 10 in radiale Richtung von der Achsbohrung 8 bis hin zur radialen Außenkontur des Lagersitzelements 5 aus, wodurch die Einbuchtung eine einfach herstellbare nutförmige Gestalt einnimmt.

### Fig.4

Wie insbesondere aus der Fig.4, welche zwei Exzenterelemente 4,4' auf der Antriebswelle 7 montiert zeigt, entnehmbar, greift ein Vorsprung 9 des Exzenters 4 in eine Einbuchtung 10' des Exzenters 4' und der Vorsprung 9' gleichzeitig in die Einbuchtung 10. Dadurch entsteht zwischen den beiden Exzenterelementen 4 und 4' eine formschlüssige Verdrehsicherung. Darüber wird eine eindeutige Positionierung vereinfacht. Da sowohl der Vorsprung 9 als auch die Einbuchtung 10 als integrierte Formelemente ausgeführt sind, werden im Gegensatz zu der bekannten Ausführung nach der Fig. 2 keine zusätzlichen Teile wie Spannstifte 20 und keine zusätzliche Montageoperationen zu Montage von den Stiften 20 benötigt. Zudem können die beiden erfindungsgemäßen Exzenterelemente 4,4' identisch ausgeführt werden.

Wie bereits in der Fig.3 gezeigt, weisen sowohl der Vorsprung 9 als auch die Einbuchtung 10 eine im Wesentlichen quaderförmige Grundgestalt auf. Die einzelnen Abmessungen können vorzugsweise derart ausgelegt sein, dass sie beim eingriff ineinander eine Presspassung aufweisen. Dadurch kann Spiel in der Verdrehsicherung vermieden und die Dauerhaltbarkeit, Präzision und Wirkungsgrad des Kurbeltriebs erhöht werden.

Selbstverständlich ist es innerhalb der Erfindung möglich, auch eine abweichende Anzahl sowie Grundgestalten von Vorsprüngen und Einbuchtungen zu realisieren. Ebenso ist es vorstellbar einen von 180° abweichenden Drehwinkelversatz zwischen einer Einbuchtung und einem Vorsprung abzubilden, wodurch eine spezifische und von der vorstehend beschriebenen abweichende Bewegungsabfolge der Verdrängerelemente 2,2' realisiert werden kann.

### Fig.5

Die Fig.5 zeigt eine weitere erfindungsgemäße Ausführungsform eines Exzenterelements 4. Im Unterschied zu dem Exzenterelement 4 nach den Fig.3 und 4 ist das Exzenterelement 4 in der Fig.5 zweiteilig ausgeführt und weist ein von dem Lagersitzelement 5 separat herstellbares und zu einem späteren Zeitpunkt auf diesem montierbares Wuchtelement 6 auf. Dadurch kann das Lagersitzelement 5 einfach aus einem Rundstahl hergestellt und für das Kugellager oder ein andersartig ausgeführtes Radiallager der Pleuelstange 3 kostengünstig umformend kalibriert statt spannend abgedreht werden. Das Wuchtelement 6 kann ebenso besonders einfach und kostengünstig aus einem flachen Ausgangsmaterial gestanzt, geschnitten oder gelasert werden. Teure Sinterformen samt dem aufwendigen, energie- und kostenintensiven Sinterverfahren werden vermieden.

### Fig.6

Das aus der Fig.5 bekanntes Wuchtelement 6 wird auf dem Lagersitzelement 5 kraftschlüssig befestigt. Hierfür weist das Wuchtelement 6 einen Durchbruch 11 auf. Der Durchmesser des Durchbruchs 11 ist vorzugsweise auf eine Presspassung ausgelegt, damit das Lagersitzelement 5 in den Durchbruch 11 eingepresst oder eingeschrumpft werden kann und das Wuchtelement 6 bei allen vorgesehenen Betriebszuständen dauerhaltbar und in der ursprünglichen Lage auf dem Lagersitzelement verbleibt.

### Fig.7

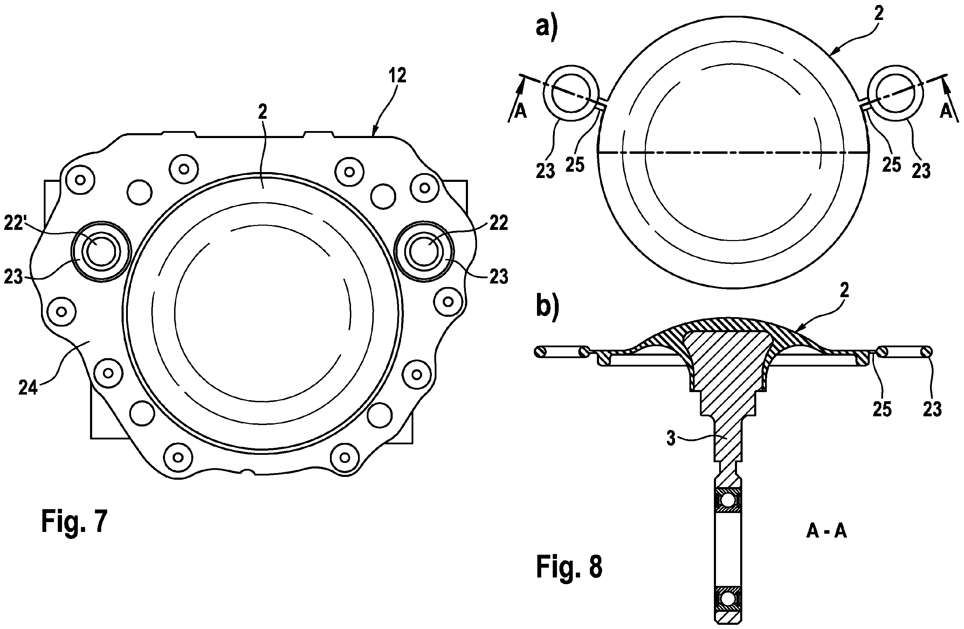

Die Fig.7 zeigt eine Draufsicht auf ein Pumpengehäuse 12, der Arbeitsraumdeckel 16 ist dabei demontiert und nicht gezeigt. Das Pumpengehäuse weist zwei integrierte Luftkanäle 22,22' auf, wobei eines der Kanäle einer pneumatischen Anbindung von dem nicht gezeigten pneumatischen Bremskraftverstärker an die Arbeitskammer 17 dient und das andere Luftkanal zum Abführen der Luft von der Arbeitskammer 17 in das Innere des Pumpengehäuses 12 oder in die Umgebung geeignet ist.

Die beiden Luftkanäle 22,22' werden durch Dichtelemente 23 abgedichtet, indem diese im montierten Zustand des Pumpenaggregats 1 im Bereich des Flansches 24 des Pumpengehäuse 12 durch einen korrespondierenden Flansch des Arbeitsraumdeckels 16 verpresst werden.

### Fig.8

Fig.8 zeigt eine erfindungsgemäße Ausführungsform eines Verdrängerelements 2. Im Unterschied zu der vorstehend beschriebenen bekannten Ausführungsform sind die beiden Dichtelemente 23 durch Stege 25 an das Verdrängerelement 2 angeformt, wodurch das Verdrängerelement 2 einstückig mit den Dichtelementen 23 ausgeführt ist.

Innerhalb der Erfindung ist es jedoch vorstellbar, bei Bedarf anwendungsspezifisch nicht zwei, sondern nur eines oder auch mehr Dichtelemente an das Verdrängerelement einstückig anzuformen. Ebenso kann die Form der Dichtelemente 23 von der gezeigten beliebig abweichen, ohne die Erfindung zu verlassen.

### Bezugszeichen:

- 1: Pumpenaggregat
- 2,2': Verdrängerelement
- 3,3': Pleuelstange
- 4,4': Exzenterelement
- 5,5': Lagersitzelement
- 6,6': Wuchtelement
- 7: Antriebswelle
- 8: Achsbohrung
- 9: Vorsprung
- 10: Einbuchtung
- 11: Durchbruch
- 12: Pumpengehäuse
- 13: Elektrischer Antrieb
- 14: Kurbeltrieb
- 15,15': Kugellager
- 16,16': Arbeitsraumdeckel
- 17,17': Arbeitsraum
- 18: Rückschlagventilanordnung
- 19: Vakuumleitung
- 20: Spannstift
- 21: Stiftbohrung
- 22: Luftkanal
- 23: Dichtelement
- 24: Flansch
- 25: Steg
- R: Rotationsachse

## Patentansprüche

1. Pumpenaggregat (1) mit einem Pumpengehäuse (12), zur Unterdruckversorgung eines pneumatischen Bremskraftverstärkers, wobei das Pumpenaggregat (1) über ein erstes elastisches Verdrängerelement (2) und ein zweites elastisches Verdrängerelement (2') verfügt, das erste elastische Verdrängerelement (2) durch eine erste Pleuelstange (3), das zweite elastische Verdrängerelement (2') durch eine zweite Pleuelstange bewegt ist, wobei die erste Pleuelstange (3) auf einem ersten Exzenterelement (4) und die zweite Pleuelstange (3') auf einem zweiten Exzenterlement (4') drehbar gelagert ist, wobei das erste Exzenterlement (4) ein erstes Lagersitzelement (5) und ein erstes Wuchtelement (6), das zweite Exzenterelement (4') ein zweites Lagersitzelement (5') und ein zweites Wuchtelement (6') aufweisen, wobei die Exzenterelemente (4,4') nebeneinander auf einer Antriebswelle (7) fixiert sind, die um eine Rotationsachse (R) rotiert und formschlüssige Verdrehsicherungsmittel vorgesehen sind, die eine definierte Drehwinkellage der Exzenterelemente (4,4')zueinander um die Rotationsachse (R) festlegen, **dadurch gekennzeichnet, dass** die Verdrehsicherungsmittel als integrale Formelemente der Lagersitzelemente (5,5') sind, wobei jedes Lagersitzelement (5,5') jeweils einen Vorsprung (9,9') und jeweils eine gegenüber dem Vorsprung (9,9') um 180° um die Rotationsachse R versetzt angeordnete Einbuchtung (10,10') aufweist so dass der Vorsprung (9) des ersten Lagersitzelements (5) in die Einbuchtung (10') des zweiten Lagersitzelements (5') und gleichzeitig der Vorsprung (9') des zweiten Lagersitzelements (5') in die Einbuchtung (10) des ersten Lagersitzelements (5) eingreifen.

2. Pumpenaggregat nach Anspruch 1 **dadurch gekennzeichnet, dass** der Vorsprung (9,9') mit der Einbuchtung (10,10') eine Übermaßpassung aufweisen.

3. Pumpenaggregat nach Anspruch 1 **dadurch gekennzeichnet, dass** der Vorsprung (9,9') und die Einbuchtung (10,10') jeweils eine im Wesentlichen quaderförmige Grundgestalt aufweisen.

4. Pumpenaggregat nach Anspruch 1 **dadurch gekennzeichnet, dass** das Lagersitzelement (5,5') eine das das Lagersitzelement (5,5') entlang der Rotationsachse R durchgreifende Achsbohrung 8 aufweist und die Einbuchtung (10,10') in radiale Richtung von der Achsbohrung 8 bis hin zu einer radialen Außenkontur des Lagersitzelements 5 ausgedehnt ausgeführt ist.

5. Pumpenaggregat nach Anspruch 1 **dadurch gekennzeichnet, dass** das Wuchtelement (6) kraftschlüssig auf dem Lagersitzelement (5,5') befestigt ist.

6. Pumpenaggregat nach Anspruch 5 **dadurch gekennzeichnet, dass** das Wuchtelement (6) einen Durchbruch (11) aufweist und das Lagersitzelement (5,5') kraftschlüssig in dem Durchbruch (11) angeordnet ist.

7. Pumpenaggregat nach Anspruch 6 **dadurch gekennzeichnet, dass** das Lagersitzelement (5,5') in dem Durchbruch (11) eingepresst oder eingeschrumpft ist.

8. Pumpenaggregat (1) nach einem der vorangegangenen Ansprüche 1 bis 7 **dadurch gekennzeichnet, dass** die Exzenterelemente (4,4') identisch gestaltet sind.

9. Pumpenaggregat nach Anspruch 1, wobei dass das Pumpengehäuse (12) über wenigstens ein integriertes Luftkanal (22, 22 ') verfügt **dadurch gekennzeichnet, dass** wenigstens ein Verdrängerelement 2 Mittel zur Abdichtung des Luftkanals (22) aufweist.

10. Pumpenaggregat nach Anspruch 9 **dadurch gekennzeichnet, dass** das Verdrängerelement (2) mit wenigstens einem Dichtelement (23) zur Abdichtung des Luftkanals (22,22') einstückig gestaltet ist.

11. Pumpenaggregat nach Anspruch 10 **dadurch gekennzeichnet, dass** das Verdrängerelement (2) mit zwei Dichtelementen (23) zur Abdichtung der Luftkanäle (22,22') einstückig gestaltet ist.

## Claims

1. Pump assembly (1) having a pump housing (12), for supplying a pneumatic brake booster with vacuum, the pump assembly (1) having a first elastic displacer element (2) and a second elastic displacer element (2'), the first elastic displacer element (2) being moved by way of a first connecting rod (3), the second elastic displacer element (2') being moved by way of a second connecting rod, the first connecting rod (3) being mounted rotatably on a first eccentric element (4), and the second connecting rod (3') being mounted rotatably on a second eccentric element (4'), the first eccentric element (4) having a first bearing seat element (5) and a first balancing element (6), the second eccentric element (4') having a second bearing seat element (5') and a second balancing element (6'), the eccentric elements (4, 4') being fixed next to one another on a drive shaft (7) which rotates about a rotational axis (R), and positively locking anti-rotation safeguard means being provided which fix a defined rotational angle position of the eccentric elements (4, 4') with respect to one another about the rotational axis (R), **characterized in that** the anti-rotation safeguard means are integral form elements of the bearing seat elements (5, 5'), each bearing seat element (5, 5') having in each case one projection (9, 9') and in each case one indentation (10, 10') which is arranged offset by 180° about the rotational axis R with respect to the projection (9, 9'), with the result that the projection (9) of the first bearing seat element (5) engages into the indentation (10') of the second bearing seat element (5'), and at the same time the projection (9') of the second bearing seat element (5') engages into the indentation (10) of the first bearing seat element (5) .

2. Pump assembly according to Claim 1, **characterized in that** the projection (9, 9') has an oversize fit with the indentation (10, 10').

3. Pump assembly according to Claim 1, **characterized in that** the projection (9, 9') and the indentation (10, 10') in each case have a substantially cuboid basic shape.

4. Pump assembly according to Claim 1, **characterized in that** the bearing seat element (5, 5') has an axial bore 8 which reaches through the bearing seat element (5, 5') along the rotational axis R, and the indentation (10, 10') is configured so as to extend in the radial direction from the axial bore 8 as far as a radial outer contour of the bearing seat element 5.

5. Pump assembly according to Claim 1, **characterized in that** the balancing element (6) is fastened in a non-positive manner on the bearing seat element (5, 5').

6. Pump assembly according to Claim 5, **characterized in that** the balancing element (6) has an aperture (11), and the bearing seat element (5, 5') is arranged in the aperture (11) in a non-positive manner.

7. Pump assembly according to Claim 6, **characterized in that** the bearing seat element (5, 5') is pressed or shrunk into the aperture (11).

8. Pump assembly (1) according to one of the preceding Claims 1 to 7, **characterized in that** the eccentric elements (4, 4') are of identical design.

9. Pump assembly according to Claim 1, the pump housing (12) having at least one integrated air duct (22, 22'), **characterized in that** at least one displacer element has two means for sealing the air duct (22).

10. Pump assembly according to Claim 9, **characterized in that** the displacer element (2) is of one-piece design with at least one sealing element (23) for sealing the air duct (22, 22').

11. Pump assembly according to Claim 10, **characterized in that** the displacer element (2) is of one-piece design with two sealing elements (23) for sealing the air ducts (22, 22').

## Revendications

1. Groupe motopompe (1) comprenant un boîtier de pompe (12) pour l'alimentation en dépression d'un servofrein, le groupe motopompe (1) disposant d'un premier élément de refoulement élastique (2) et d'un deuxième élément de refoulement élastique (2'), le premier élément de refoulement élastique (2) étant déplacé par une première bielle (3), le deuxième élément de refoulement élastique (2') étant déplacé par une deuxième bielle, la première bielle (3) étant supportée à rotation sur un premier élément excentrique (4) et la deuxième bielle (3') étant supportée à rotation sur un deuxième élément excentrique (4'), le premier élément excentrique (4) présentant un premier élément de siège de palier (5) et un premier élément d'équilibrage (6), le deuxième élément excentrique (4') présentant un deuxième élément de siège de palier (5') et un deuxième élément d'équilibrage (6'), les éléments excentriques (4, 4') étant fixés l'un à côté de l'autre sur un arbre d'entraînement (7) qui tourne autour d'un axe de rotation (R) et des moyens de fixation en rotation par engagement par correspondance de formes étant prévus, lesquels établissent une position angulaire de rotation définie des éléments excentriques (4, 4') l'un par rapport à l'autre autour de l'axe de rotation (R), **caractérisé en ce que** les moyens de fixation en rotation sont réalisés sous forme d'éléments moulés intégrés des éléments de siège de palier (5, 5'), chaque élément de siège de palier (5, 5') présentant à chaque fois une saillie (9, 9') et à chaque fois un renfoncement (10, 10') disposé par rapport à la saillie (9, 9') de manière décalée de 180° autour de l'axe de rotation R de telle sorte que la saillie (9) du premier élément de siège de palier (5) s'engage dans le renfoncement (10') du deuxième élément de siège de palier (5') et que simultanément la saillie (9') du deuxième élément de siège de palier (5') s'engage dans le renfoncement (10) du premier élément de siège de palier (5).

2. Groupe motopompe selon la revendication 1, **caractérisé en ce que** la saillie (9, 9') et le renfoncement (10, 10') présentent un ajustement avec surdimensionnement.

3. Groupe motopompe selon la revendication 1, **caractérisé en ce que** la saillie (9, 9') et le renfoncement (10, 10') présentent à chaque fois une forme de base essentiellement parallélépipédique.

4. Groupe motopompe selon la revendication 1, **caractérisé en ce que** l'élément de siège de palier (5, 5') présente un alésage axial (8) traversant l'élément de siège de palier (5, 5') le long de l'axe de rotation R et le renfoncement (10, 10') est réalisé de manière à s'étendre dans la direction radiale depuis l'alésage axial (8) jusqu'à un contour extérieur radial de l'élément de siège de palier (5).

5. Groupe motopompe selon la revendication 1, **caractérisé en ce que** l'élément d'équilibrage (6) est fixé par engagement par force sur l'élément de siège de palier (5, 5').

6. Groupe motopompe selon la revendication 5, **caractérisé en ce que** l'élément d'équilibrage (6) présente un orifice (11) et l'élément de siège de palier (5, 5') est disposé par engagement par force dans l'orifice (11).

7. Groupe motopompe selon la revendication 6, **caractérisé en ce que** l'élément de siège de palier (5, 5') est enfoncé dans l'orifice (11) par pressage ou frettage.

8. Groupe motopompe (1) selon l'une quelconque des revendications précédentes 1 à 7, **caractérisé en ce que** les éléments excentriques (4, 4') sont formés de manière identique.

9. Groupe motopompe selon la revendication 1, dans lequel que le boîtier de pompe (12) dispose d'au moins un canal d'air intégré (22, 22'), **caractérisé en ce qu'**au moins un élément de refoulement (2) présente des moyens pour étanchéifier le canal d'air (22) .

10. Groupe motopompe selon la revendication 9, **caractérisé en ce que** l'élément de refoulement (2) est configuré d'une seule pièce avec au moins un élément d'étanchéité (23) pour étanchéifier le canal d'air (22, 22').

11. Groupe motopompe selon la revendication 10, **caractérisé en ce que** l'élément de refoulement (2) est configuré d'une seule pièce avec deux éléments d'étanchéité (23) pour étanchéifier les canaux d'air (22, 22').
